(19) **Europäisches Patentamt**
**European Patent Office**
**Office européen des brevets**

(11) **EP 3 604 396 A1**

(12) **EUROPEAN PATENT APPLICATION**
published in accordance with Art. 153(4) EPC

(43) Date of publication:
**05.02.2020 Bulletin 2020/06**

(21) Application number: **18770900.1**

(22) Date of filing: **08.03.2018**

(51) Int Cl.:
*C08J 3/00* (2006.01)     *C08B 3/06* (2006.01)
*C08B 5/00* (2006.01)     *C08B 11/12* (2006.01)
*C08B 15/04* (2006.01)     *C08B 15/06* (2006.01)

(86) International application number:
**PCT/JP2018/008897**

(87) International publication number:
**WO 2018/173761 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2017 JP 2017056289**

(71) Applicant: **Nippon Paper Industries Co., Ltd.**
**Tokyo 114-0002 (JP)**

(72) Inventors:
• **MATSUMOTO Makoto**
**Tokyo 114-0002 (JP)**
• **SATO Shinji**
**Tokyo 114-0002 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **METHOD FOR STORING CHEMICALLY MODIFIED CELLULOSE FIBERS AND METHOD FOR PRODUCING CHEMICALLY MODIFIED CELLULOSE NANOFIBERS**

(57)     Provided is a method for storing chemically modified cellulose fibers, said method characterized by storing chemically modified cellulose fibers in an atmosphere of 0-18°C.

EP 3 604 396 A1

**Description**

{Technical Field}

The present invention relates to a method for storing chemically modified cellulose fibers and a method for producing chemically modified cellulose nanofibers.

{Background Art}

The chemically modified cellulose fiber is composed of chemically modified pulp with a fiber diameter of 1 $\mu$m or more and chemically modified cellulose nanofibers (hereinafter also referred to as "CNF") obtained by defibrating the chemically modified pulp.

The chemically modified cellulose nanofiber is a fine fiber with a fiber diameter of about 2 to 1,000 nm and is excellent in water-based dispersion, and application to fields such as food, cosmetics, medical products, or paints is expected. Specifically, application to viscosity retention of paints, reinforcement of food raw material dough, retention of water, improvement of food stability, low-calorie additives, or emulsion stabilizing aid is expected.

Conventionally, storage of chemically modified pulp and chemically modified cellulose nanofibers has been put in a packaging bag or packaging container and stored in a normal temperature state. However, there have been problems that chemically modified pulp and chemically modified cellulose nanofibers stored in a normal temperature state for a long period cause bacterial growth and discoloration, and viscosity of chemically modified cellulose nanofibers obtained by defibrating chemically modified cellulose nanofibers after storage and chemically modified pulp after storage is greatly reduced. For example, in the field of carboxymethylcellulose, a method for preventing deterioration in an atmosphere of low oxygen concentration has been proposed (Patent Literature 1), but in the field of cellulose nanofibers, further improvement of storage stability has been desired.

{Citation List}

{Patent Literature}

Patent Literature 1: JP 2012-121957 A

{Summary of Invention}

{Technical Problem}

An object of the present invention is to provide a storage method capable of suppressing the viscosity reduction and the occurrence of bacterial growth and discoloration of chemically modified cellulose fibers for a long period of time. Another object of the present invention is to provide a method for producing chemically modified cellulose nanofibers using chemically modified pulp stored by this storage method.

{Solution to Problem}

The present invention provides (1) to (5) shown below.

(1): A method for storing chemically modified cellulose fibers, including storing chemically modified cellulose fibers in an atmosphere of 0 to 18°C.
(2): The method for storing chemically modified cellulose fibers according to (1), wherein the chemically modified cellulose fibers are chemically modified pulp.
(3): The method for storing chemically modified cellulose fibers according to (1), wherein the chemically modified cellulose fibers are chemically modified cellulose nanofibers.
(4): The method for storing chemically modified cellulose fibers according to any one of (1) to (3), wherein the chemically modified cellulose fibers contain at least one selected from carboxylated (oxidized) cellulose fibers, carboxymethylated cellulose fibers, cationized cellulose fibers, phosphorylated cellulose fibers and acetylated cellulose fibers.
(5) A method for producing chemically modified cellulose nanofibers, including the step of defibrating the chemically modified pulp stored by the method as defined in (2) .

{Advantageous Effects of Invention}

According to the present invention, it is possible to provide a storage method capable of suppressing the viscosity reduction and the occurrence of bacterial growth and discoloration of chemically modified cellulose fibers for a long period of time. Moreover, it is possible to provide a method for producing chemically modified cellulose nanofibers using chemically modified pulp stored by this storage method.

{Description of Embodiments}

The present invention includes storing chemically modified cellulose fibers in an atmosphere of 0 to 18°C. By storing the chemically modified cellulose fibers in this manner, excellent viscosity stability is obtained. As storage conditions, it is preferable that it is 10°C or less, and it is more preferable that it is 6°C or less. That is, the temperature may be 0 to 18°C, preferably 0 to 10°C, and further preferably 0 to 6°C.

On the other hand, when it is less than 0°C, it may be frozen and a step of dissolving after storage is required. Moreover, when it exceeds 18°C, sufficient viscosity stability cannot be obtained. Furthermore, bacteria are likely to grow on the chemically modified cellulose fiber, and discoloration is also likely to occur.

When chemically modified cellulose nanofibers obtained by defibrating chemically modified pulp are stored at 0 to 18°C, viscosity change of the chemically modified cellulose nanofibers before and after storage is small and stable. When the chemically modified pulp is stored at 0 to 18°C, viscosity change of the chemically modified pulp before and after storage is small and stable. When the chemically modified pulp is stored at 0 to 18°C and then defibrated to form chemically modified cellulose nanofibers, viscosity change of the chemically modified cellulose nanofibers obtained by defibrating the chemically modified pulp before and after storage is small and stable.

In the present invention, in storage, it is preferable to put in a packaging bag or a packaging container. As the packaging bag, generally, any bag can be used as long as it is used for packaging, and as its material, it is preferable to use one having gas barrier properties imparted by one made of polyethylene, polypropylene, polyvinyl chloride or the like, an aluminum packaging material, polyacrylonitrile, polyvinyl alcohol, an ethylene-vinyl alcohol copolymer, polyvinylidene chloride or the like.

As the packaging container, in general, any container can be used as long as it is used for packaging, and a container of any shape such as a bag, a box or a can be used. As its material, it is preferable to use one having gas barrier properties or light shielding properties, and metals such as stainless steel, those made of synthetic polymers such as polyethylene terephthalate or polypropylene, and ethylene-vinyl alcohol copolymers, polyvinylidene chloride, aluminum packaging materials, paper materials, pigments and the like can be used alone or in combination.

(Chemically modified cellulose fiber)

The chemically modified cellulose fiber refers to chemically modified pulp obtained by chemically modifying a cellulose-based raw material, and a chemically modified cellulose nanofiber obtained by defibrating the chemically modified pulp.

(Chemically modified pulp)

In the present invention, a chemically modified cellulose fiber with a fiber diameter of 1 $\mu$m or more is defined as chemically modified pulp. The upper limit of the fiber diameter of the chemically modified pulp is not particularly limited, but is usually about 100 $\mu$m. The fiber length of the chemically modified pulp is not particularly limited, but is usually about 0.1 to 10 mm. The fiber diameter and the fiber length can be determined by observing each fiber using an optical microscope or a microscope.

(Chemically modified cellulose nanofiber)

In the present invention, a chemically modified cellulose fiber with a fiber diameter of less than 1 $\mu$m is defined as a chemically modified cellulose nanofiber. The average fiber diameter of chemically modified cellulose nanofibers is not particularly limited, but the length-weighted average fiber diameter is usually about 2 to 980 nm, and preferably 2 to 100 nm. The average fiber length of chemically modified cellulose nanofibers is not particularly limited, but the length-weighted average fiber length is preferably 50 to 2000 nm. The length-weighted average fiber diameter and the length-weighted average fiber length (hereinafter, also simply referred to as "average fiber diameter" or "average fiber length") are determined by observing each fiber using an atomic force microscope (AFM) or a transmission electron microscope (TEM). The average aspect ratio of the modified cellulose nanofibers is 10 or more. The upper limit is not particularly limited, but is 1000 or less. The average aspect ratio can be calculated by the following equation 1.

```
<Equation 1>

Average aspect ratio = Average fiber length/Average fiber diameter
```

(Cellulose-based raw material)

As cellulose-based raw materials which are raw materials of chemically modified cellulose fibers, those derived from plants, animals (e.g. Ascidiacea), algae, microorganisms (e.g. Acetobacter), microorganism products, or the like are known, and any of them can be used in the present invention. Examples of the plant-derived raw materials include wood, bamboo, hemp, jute, kenaf, farm waste, fabric, and pulp (softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), recycled pulp, waste paper, and the like). In the present invention, cellulose fibers derived from plants or microorganisms are preferred, and cellulose fibers derived from plants are more preferred.

The cellulose-based raw material has three hydroxyl groups per glucose unit, and becomes chemically modified pulp by performing various types of chemical modification.

(Chemical modification)

Examples of chemical modification include carboxylation (oxidation), carboxymethylation, esterification such as phosphorylation, silane coupling, fluorination, cationization, and the like. Among them, carboxylation (oxidation), carboxymethylation, cationization and esterification are preferred, and carboxylation (oxidation) and carboxymethylation are more preferred.

(Carboxymethylation)

Carboxymethylated cellulose can be used as the chemically modified pulp. The degree of substitution with carboxymethyl group per anhydroglucose unit in the carboxymethylated cellulose is preferably 0.01 or more, more preferably 0.05 or more, and further preferably 0.10 or more. The upper limit of the degree of substitution is preferably 0.50 or less, more preferably 0.40 or less, and further preferably 0.35 or less. Accordingly, the degree of substitution with carboxymethyl group is preferably 0.01 to 0.50, more preferably 0.05 to 0.40, and further preferably 0.10 to 0.35.

Although the carboxymethylation method is not particularly limited, examples thereof include a method of mercerizing the aforementioned cellulose raw material and then etherifying it. A solvent is usually used for the reaction. Examples of the solvent include water, alcohols (for example, lower alcohols) and mixed solvents thereof. Examples of the lower alcohol include methanol, ethanol, N-propyl alcohol, isopropyl alcohol, N-butanol, isobutanol, and tertiary butanol. The mixing ratio of the lower alcohol in the mixed solvent is usually 60% by weight or more or 95% by weight or less, and preferably 60 to 95% by weight. The amount of solvent is usually 3 times by weight with respect to the cellulose raw material. Although the upper limit of the amount is not particularly limited, it is 20 times by weight. Therefore, the amount of solvent is preferably 3 to 20 times by weight.

Mercerization is usually performed by mixing the aforementioned cellulose raw material and a mercerizing agent. Examples of the mercerizing agent include alkali metal hydroxides such as sodium hydroxide and potassium hydroxide. The amount of the mercerizing agent to be used is preferably 0.5 times or more in mole, more preferably 1.0 times or more in mole, and further preferably 1.5 times or more in mole per anhydroglucose residue of a starting material. The upper limit of the amount is usually 20 times or less in mole, preferably 10 times or less in mole, and more preferably 5 times or less in mole. Therefore, the amount of the mercerizing agent to be used is preferably 0.5 to 20 times in mole, more preferably 1.0 to 10 times in mole, and further preferably 1.5 to 5 times in mole.

The reaction temperature for mercerization is usually 0°C or more, and preferably 10°C or more, and the upper limit is usually 70°C or less, and preferably 60°C or less. Accordingly, the reaction temperature is usually 0 to 70°C, and preferably 10 to 60°C. The reaction time is usually 15 minutes or more, and preferably 30 minutes or more. The upper limit of the time is usually 8 hours or less, and preferably 7 hours or less. Therefore, the reaction time is usually 15 minutes to 8 hours, and preferably 30 minutes to 7 hours.

An etherification reaction is usually performed by adding a carboxymethylating agent to the reaction system after mercerization. Examples of the carboxymethylating agent include sodium monochloroacetate. The amount of the carboxymethylating agent to be added is preferably 0.05 times or more in mole, more preferably 0.5 times or more in mole, and further preferably 0.8 times or more in mole per glucose residue of the cellulose raw material. The upper limit

4

of the amount is usually 10.0 times or less in mole, preferably 5 times or less in mole, and more preferably 3 times or less in mole. Therefore, the amount is preferably 0.05 to 10.0 times in mole, more preferably 0.5 to 5 times in mole, and further preferably 0.8 to 3 times in mole. The reaction temperature is usually 30°C or more, and preferably 40°C or more, and the upper limit is usually 90°C or less, and preferably 80°C or less. Accordingly, the reaction temperature is usually 30 to 90°C, and preferably 40 to 80°C. The reaction time is usually 30 minutes or more, and preferably 1 hour or more, and the upper limit thereof is usually 10 hours or less, and preferably 4 hours or less. Accordingly, the reaction time is usually 30 minutes to 10 hours, and preferably 1 hour to 4 hours. A reaction solution may be agitated as necessary, during the carboxymethylation reaction.

(Carboxylation)

As the chemically modified pulp, carboxylated (oxidized) cellulose (also referred to as "oxidized cellulose") can be used. Carboxylated cellulose can be obtained by carboxylating (oxidizing) the aforementioned cellulose raw material by a known method. Although not particularly limited, the carboxy group content is preferably 0.6 to 3.0 mmol/g, and more preferably 1.0 to 2.0 mmol/g, based on the bone dry weight of CNF.

An example of a carboxylation (oxidation) method includes a method of oxidizing the cellulose raw material in water in the presence of an N-oxyl compound and a compound selected from the group consisting of bromides, iodides and mixtures thereof, using an oxidant. By this oxidation reaction, the primary hydroxyl group on the C6 position of a glucopyranose ring on the cellulose surface is selectively oxidized, and a cellulose fiber having an aldehyde group and a carboxy group (-COOH) or a carboxylate group (-COO⁻) can be obtained. The concentration of cellulose during the reaction is not particularly limited, but is preferably 5% by weight or less.

The N-oxyl compound refers to a compound that may generate a nitroxyl radical. Any compound that promotes the target oxidation reaction can be used as the N-oxyl compound. Examples include 2,2,6,6-tetramethylpiperidine-1-oxy radical (TEMPO) and a derivative thereof (e.g. 4-hydroxy TEMPO).

The amount of the N-oxyl compound to be used is not limited as long as it is a catalytic amount that can oxidize the cellulose as raw material. For example, the amount is preferably 0.01 to 10 mmol, more preferably 0.01 to 1 mmol, and further preferably 0.05 to 0.5 mmol, based on 1 g of bone dry cellulose. Also, the amount is preferably about 0.1 to 4 mmol/L with respect to the reaction system.

The bromide is a compound containing bromine, and example thereof includes an alkali metal bromide that can be ionized by dissociation in water. Further, the iodide is a compound containing iodine, and example thereof includes an alkali metal iodide. The amount of the bromide or iodide to be used can be selected from a range that can promote the oxidation reaction. The total amount of the bromides and iodides is, for example, preferably 0.1 to 100 mmol, more preferably 0.1 to 10 mmol, and further preferably 0.5 to 5 mmol, based on 1 g of bone dry cellulose.

As the oxidant, known ones can be used, and for example, halogens, hypohalous acids, halous acids, perhalogen acids or salts thereof, halogen oxides, peroxides and the like can be used. Among them, sodium hypochlorite which is inexpensive and low in environmental load is preferable. The amount of the oxidant to be used is, for example, preferably 0.5 to 500 mmol, more preferably 0.5 to 50 mmol, further preferably 1 to 25 mmol, and most preferably 3 to 10 mmol, based on 1 g of bone dry cellulose. Also, for example, the amount of the oxidant to be used is preferably 1 to 40 mol based on 1 mol of the N-oxyl compound.

Oxidation of cellulose allows the reaction to proceed efficiently even under relatively mild conditions. Therefore, the reaction temperature is preferably 4 to 40°C, or may be room temperature of about 15 to 30°C. Since carboxy groups are formed in the cellulose as the reaction proceeds, decrease in the pH of the reaction solution is observed. In order to allow the oxidation reaction to proceed efficiently, it is preferable to add an alkaline solution such as an aqueous sodium hydroxide solution to maintain the pH of the reaction solution at about 8 to 12, and preferably about 10 to 11. As a reaction medium, water is preferred for its ease of handling, low occurrence of side reactions, and the like.

The reaction time in the oxidation reaction can be appropriately set according to the degree of progress of oxidation, and is usually about 0.5 to 6 hours, for example, about 0.5 to 4 hours.

Also, the oxidation reaction may be performed in two stages. For example, the oxidized cellulose obtained by filtration after completion of a first stage reaction is oxidized again under the same or different reaction conditions, whereby it can be efficiently oxidized without receiving reaction inhibition by salt by-produced in the first stage reaction.

Another example of the carboxylation (oxidation) method includes a method of oxidizing the cellulose raw material by bringing a gas containing ozone into contact with the cellulose raw material. By this oxidation reaction, at least hydroxyl groups on position 2 and position 6 of the glucopyranose ring are oxidized, and decomposition of a cellulose chain is caused.

The ozone concentration in the gas containing ozone is preferably 50 to 250 g/m³, and more preferably 50 to 220 g/m³. The amount of ozone to be added to the cellulose raw material is preferably 0.1 to 30 parts by weight, and more preferably 5 to 30 parts by weight, based on 100 parts by weight of a solid content of the cellulose raw material.

The ozone treatment temperature is preferably 0 to 50°C, and more preferably 20 to 50°C. The ozone treatment time is not particularly limited, and is about 1 to 360 minutes, and preferably about 30 to 360 minutes. When the conditions of ozone treatment are within these ranges, excessive oxidation and decomposition of cellulose can be prevented, and the yield of oxidized cellulose becomes good.

After the ozone treatment, an additional oxidation treatment may be performed using an oxidant. The oxidant to be used in the additional oxidation treatment is not particularly limited, and examples thereof include chlorine compounds such as chlorine dioxide and sodium chlorite, oxygen, hydrogen peroxide, persulfuric acid, peracetic acid, and the like. For example, the additional oxidation treatment can be performed by dissolving the oxidant in water or a polar organic solvent such as alcohol to form an oxidant solution, and immersing the cellulose raw material in the solution.

The carboxy group content of the oxidized cellulose can be adjusted by controlling the reaction conditions such as the amount of the oxidant to be added and the reaction time.

(Cationization)

As the chemically modified cellulose, cellulose obtained by further cationizing the carboxylated cellulose can be used. The cation-modified cellulose can be obtained by reacting the carboxylated cellulose with a cationizing agent such as glycidyltrimethylammonium chloride, 3-chloro-2-hydroxypropyl trialkylammonium halide or a halohydrin thereof, and an alkali metal hydroxide (sodium hydroxide, potassium hydroxide, or the like) as a catalyst, in the presence of water or an alcohol having 1 to 4 carbon atoms.

The degree of substitution with cationic group per glucose unit is preferably 0.02 to 0.50. By introducing a cationic substituent into cellulose, the celluloses electrically repel each other. For this reason, cellulose into which a cationic substituent is introduced can be easily nano-defibrated. When the degree of substitution with cationic group per glucose unit is less than 0.02, the cellulose cannot be fully nano-defibrated. On the other hand, when the degree of substitution with cationic group per glucose unit is more than 0.50, the cellulose swells or dissolves so that it may not be obtained as nanofibers. In order to perform defibration efficiently, it is preferable that the cation-modified cellulose-based raw material obtained above is washed. The degree of substitution with cationic group can be adjusted by the addition amount of a cationizing agent to be reacted, the composition ratio of water or an alcohol having 1 to 4 carbon atoms.

(Phosphorylation)

Phosphorylated cellulose can be used as the chemically modified cellulose. The cellulose is obtained by a method of mixing a powder or aqueous solution of phosphoric acid compound A with the aforementioned cellulose-based raw material, and a method of adding an aqueous solution of phosphoric acid compound A to slurry of the cellulose-based raw material.

Examples of the phosphoric acid compound A include phosphoric acid, polyphosphoric acid, phosphorous acid, phosphonic acid, polyphosphonic acid, or esters thereof. They may be in the form of a salt. Among them, a compound having a phosphate group is preferred due to its low cost, ease of handling, and its ability to improve defibration efficiency by introducing a phosphate group into cellulose in pulp fibers. Examples of the compound having a phosphate group includes phosphoric acid, sodium dihydrogen phosphate, disodium hydrogen phosphate, trisodium phosphate, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, ammonium metaphosphate, and the like. They can be used alone or in combination of two or more. Among them, phosphoric acid, sodium salts of phosphoric acid, potassium salts of phosphoric acid, and ammonium salts of phosphoric acid are more preferred, due to high efficiency of introducing a phosphate group, ease of defibration in the defibration step shown below, and ease of industrial application. Sodium dihydrogen phosphate and disodium hydrogen phosphate are particularly preferred. Also, the phosphoric acid compound A is preferably used as an aqueous solution since uniformity of the reaction increases and the efficiency of introducing a phosphate group increases. The pH of the aqueous solution of the phosphoric acid compound A is preferably 7 or less since the efficiency of introducing a phosphate group increases, and a pH of 3 to 7 is preferable from the viewpoint of suppressing hydrolysis of pulp fibers.

An example of a method for producing phosphorylated cellulose includes the following method. The phosphoric acid compound A is added to a dispersion of the cellulose-based raw material with a solid content concentration of 0.1 to 10% by weight while agitating to introduce a phosphate group to cellulose. The amount of phosphoric acid compound A to be added is preferably 0.2 to 500 parts by weight, and more preferably 1 to 400 parts by weight, as the amount of the phosphorus element, based on 100 parts by weight of the cellulose-based raw material. When the ratio of the phosphoric acid compound A is equal to or more than the lower limit, the yield of fine fibrous cellulose can be further increased. However, the effect of increasing the yield levels off when the ratio exceeds the upper limit, which is not preferable from the viewpoint of cost.

At this time, other than the cellulose raw material and the phosphoric acid compound A, a powder or aqueous solution of compound B other than those may be mixed. The compound B is not particularly limited, but a nitrogen-containing compound exhibiting basicity is preferred. The "basicity" here is defined that the aqueous solution exhibits pink to red in the presence of a phenolphthalein indicator or the aqueous solution has a pH greater than 7. The nitrogen-containing compound exhibiting basicity used in the present invention is not particularly limited as long as the effect of the present invention is exhibited, but a compound having an amino group is preferred. Examples thereof include urea, methylamine, ethylamine, trimethylamine, triethylamine, monoethanolamine, diethanolamine, triethanolamine, pyridine, ethylenediamine, hexamethylenediamine, and the like, without being limited thereby. Among them, urea is preferred for its low cost, and ease of handling.

The amount of compound B to be added is preferably 2 to 1000 parts by weight, and more preferably 100 to 700 parts by weight, based on 100 parts by weight of the solid content of the cellulose raw material.

The reaction temperature is preferably 0 to 95°C, and more preferably 30 to 90°C. The reaction time is not particularly limited, but is about 1 to 600 minutes, and more preferably 30 to 480 minutes. When the conditions of esterification reaction are in these ranges, it is possible to prevent the cellulose from being excessively esterified and easily dissolved, and the yield of phosphorylated cellulose becomes good. After the obtained phosphorylated cellulose suspension is dehydrated, it is preferable that heat treatment is performed at 100 to 170°C, from the viewpoint of suppressing hydrolysis of the cellulose. Further, while water is contained in the heat treatment, it is preferable that heating is performed at 130°C or less, preferably 110°C or less, to remove water, and then heat treatment is performed at 100 to 170°C.

The degree of substitution with phosphate group per glucose unit of phosphorylated cellulose is preferably 0.001 to 0.40. By introducing a phosphate group substituent into cellulose, the celluloses electrically repel each other. For this reason, cellulose into which a phosphate group is introduced can be easily nano-defibrated. Here, when the degree of substitution with phosphate group per glucose unit is less than 0.001, the cellulose cannot be fully nano-defibrated. On the other hand, when the degree of substitution with phosphate group per glucose unit is more than 0.40, the cellulose swells or dissolves so that it may not be obtained as nanofibers. In order to perform defibration efficiently, it is preferable that the phosphorylated cellulose-based raw material obtained above is boiled and then washed with cold water.

(Metal support)

Among the chemically modified pulps described above, carboxylated (oxidized) cellulose, carboxymethylated cellulose, and phosphorylated cellulose may be those on which metal nanoparticles are supported.

The supported metal nanoparticles described above form a coordinate bond, a hydrogen bond, or an ionic bond with a carboxy group, a carboxymethyl group, and a phosphate group introduced into the carboxylated (oxidized) cellulose, the carboxymethylated cellulose, and the phosphorylated cellulose, respectively.

Although any method may be used to support the metal nanoparticles, it is possible to use, for example, the method described in WO 2010/095574 A.

The method of supporting the metal nanoparticles may be performed on chemically modified cellulose nanofibers obtained by defibrating chemically modified pulp described later.

(Defibration (Nano-defibration))

Chemically modified cellulose nanofibers are obtained by defibrating chemically modified pulp. Defibration treatment may be performed once or plural times.

A device to be used for defibration is not particularly limited, and examples thereof include high-speed rotation type, colloid mill type, high pressure type, roll mill type, and ultrasound type device. A high pressure or ultra high pressure homogenizer is preferable, and a wet type, high pressure or ultra high pressure homogenizer is more preferred. These devices are preferred because they can apply strong shear to the modified cellulose. The shear rate is preferably 1000 sec$^{-1}$ or more. Thereby, nanofibers can be uniformly formed, with less aggregation structure. The pressure applied to the modified cellulose is preferably 50 MPa or more, more preferably 100 MPa or more, and further preferably 140 MPa or more.

Defibration is usually carried out in a dispersion. The dispersion is usually a water-based dispersion such as an aqueous dispersion. Prior to the dispersing, pretreatment may be performed as necessary. Examples of the pretreatment include mixing, agitation, and emulsification, and the pretreatment may be performed using a known device (for example, high-speed shear mixer).

When defibration is performed on chemically modified pulp, the lower limit of the solid content concentration of the chemically modified pulp is usually 0.1% by weight or more, preferably 0.2% by weight or more, and more preferably 0.3% by weight or more. As a result, the amount of liquid becomes appropriate with respect to the amount of chemically modified pulp to be treated, which is efficient. The upper limit is usually 10% by weight or less, and preferably 6% by weight or less. Thereby, fluidity can be maintained.

(Preservative)

In the storage method of the present invention, a preservative may be added to the chemically modified cellulose fibers to be stored. The preservative is not particularly limited, and example thereof include methylparaben, ethylparaben, organic nitrogen sulfur compounds, haloaryl sulfone compounds, iodopropargyl compounds, isothiazoline compounds, phenol compounds, triazine compounds, propane-1,2-diol, and the like, which are used alone or in combination of two or more. There is no particular limitation on the blending amount in the case of using a preservative, but it is preferably 0.001 to 5% by weight with respect to the solid content of the chemically modified cellulose fibers.

{Examples}

Hereinafter, the present invention will be described in more detail by way of examples, but the present invention is not limited thereto.

(Production Example 1)

<Production of Carboxylated (TEMPO-oxidized) Pulp>

In an agitator, 5 g of NBKP (softwood bleached kraft pulp, manufactured by Nippon Paper Industries Co., Ltd.) as a cellulose raw material was added to 500 mL of an aqueous solution that dissolves 39 mg of TEMPO (Sigma Aldrich) and 514 mg of sodium bromide, and the mixture was agitated until the pulp was uniformly dispersed. An aqueous solution of sodium hypochlorite was added to the reaction system to an amount of 5.5 mmol/g, and an oxidation reaction was started. Although the pH in the system decreased during the reaction, a 3 M aqueous sodium hydroxide solution was sequentially added to adjust the pH to 10. The reaction was terminated when sodium hypochlorite was consumed and the pH in the system stopped changing. The reacted mixture was filtered through a glass filter for pulp separation, and the pulp was thoroughly washed with water to obtain oxidized pulp (hereinafter may be referred to as "carboxylated cellulose", "carboxylated pulp", or "TEMPO-oxidized pulp"). The pulp yield was 90%, the time required for the oxidation reaction was 90 minutes, and the carboxy group content was 1.6 mmol/g.

<Method of Measuring Carboxy Group Content>

A slurry (aqueous dispersion) of 0.5% by weight carboxylated cellulose was prepared in an amount of 60 mL, and a 0.1 M hydrochloric acid aqueous solution was added to adjust to pH 2.5. Then, a 0.05 N aqueous sodium hydroxide solution was added dropwise thereto, and the electric conductivity was measured until the pH reaches 11 to calculate the carboxy group content from the amount of sodium hydroxide (a) consumed in a neutralization stage of weak acid, which showed a mild change in the electric conductivity, using the following formula:

$$\text{Carboxy group content [mmol/g carboxylated cellulose]} =$$
$$a \text{ [mL]} \times 0.05/\text{weight [g] of carboxylated cellulose.}$$

(Production Example 2)

<Production of Carboxymethylated Pulp>

To an agitator were added 200 g dry weight of NBKP (softwood bleached kraft pulp, manufactured by Nippon Paper Industries Co., Ltd.) as a cellulose raw material and 111 g dry weight of sodium hydroxide, followed by water to achieve a pulp solid content of 20% by weight. Then, after agitation at 30°C for 30 minutes, 216 g (in terms of active ingredient) of sodium monochloroacetate was added. After agitation for 30 minutes, the temperature was raised to 70°C, and the mixture was agitated for 1 hour. Thereafter, the reaction product was taken out, neutralized and washed to obtain carboxymethylated pulp with a degree of substitution with carboxymethyl group per glucose unit of 0.25.

<Method of Measuring Degree of Substitution with Carboxymethyl Group per Glucose Unit>

About 2.0 g (bone dry weight) of carboxymethylated cellulose fibers was precisely weighed and put in a 300 mL volume stoppered Erlenmeyer flask. Thereto was added 100 mL of a solution prepared by adding 10 mL of special grade concentrated nitric acid to 90 mL of methanol, the solution was shaken for 3 hours to convert carboxymethylated cellulose salt (CM cellulose) into a hydrogen-type CM cellulose. Then, 1.5 to 2.0 g of the hydrogen-type CM cellulose (bone dry weight) was precisely weighed and put in a 300 mL volume stoppered Erlenmeyer flask. The hydrogen-type CM cellulose was wetted with 15 mL of 80% methanol, 100 mL of 0.1 N NaOH was added thereto, and the mixture was shaken at room temperature for 3 hours. The excess NaOH was back titrated with 0.1 N $H_2SO_4$ using phenolphthalein as an indicator. The degree of substitution with carboxymethyl group (DS) was calculated by equation 2.

<Equation 2>

$$A = [(100 \times F' - (0.1\ N\ H_2SO_4)\ (mL) \times F) \times 0.1]/(\text{Bone dry weight (g) of hydrogen-type CM cellulose})$$

$$DS = 0.162 \times A/(1 - 0.058 \times A)$$

A: 1 N NaOH amount (mL) required for neutralization of 1 g of hydrogen-type CM cellulose
F: Factor of 0.1 N $H_2SO_4$
F': Factor of 0.1 N NaOH

(Production Example 3)

<Production of Cationized Pulp>

To an agitator were added 200 g dry weight of LBKP (hardwood bleached kraft pulp, manufactured by Nippon Paper Industries Co., Ltd.) as a cellulose raw material and 24 g dry weight of sodium hydroxide, and followed by water so as to have a solid concentration of 15% by weight. Then, after agitation at 30°C for 30 minutes, the temperature was raised to 70°C, and 190 g (in terms of active ingredient) of 3-chloro-2-hydroxypropyltrimethylammonium chloride was added thereto as a cationizing agent. After 1 hour of reaction, the reaction mixture was separated, neutralized and washed to obtain cationized pulp with a degree of substitution with cationic group of 0.04 per glucose unit.

<Method of Measuring Degree of Substitution with Cationic Group per Glucose Unit>

An example of the method of measuring the degree of substitution with cationic group per glucose unit is described below. After drying the sample (cationized cellulose), the nitrogen content is measured with a total nitrogen analyzer TN-10 (manufactured by Mitsubishi Chemical Corporation). For example, when 3-chloro-2-hydroxypropyltrimethylammonium chloride is used as a cationizing agent, the degree of substitution with cationic group is calculated by the (Equation 3) below. Here, the degree of substitution with cationic group calculated by the following equation 3 refers to an average value of moles of a substituent per 1 mol of anhydroglucose unit.

<Equation 3>

$$\text{Degree of substitution with cationic group} = (162 \times N)/(1 - 116 \times N)$$

(N represents the nitrogen content (mol) per 1 g of cationized cellulose)

<Measurement of Average Fiber Diameter, Average Fiber Length, Aspect Ratio of Chemically Modified Cellulose Nanofibers>

The average fiber diameter and average fiber length of cellulose nanofibers (CNF) were analyzed for 200 randomly selected fibers, using a field emission scanning electron microscope (FE-SEM). The aspect ratio was calculated by the equation 1.

<Measurement of B-type Viscosity>

Viscosity of chemically modified cellulose nanofiber aqueous dispersion (solid content 1.0% by weight, 25°C) and chemically modified pulp aqueous dispersion (solid content 1.0% by weight, 25°C) was measured using a B-type viscometer. Measurement conditions were set to 60 rpm and 3 minutes.

<Viscosity Change Rate>

The change rate of viscosity (Viscosity 2) of 1.0% by weight chemically modified cellulose nanofiber aqueous dispersion after storage at low temperature and normal temperature, respectively, for 3 months or 6 months, relative to viscosity (Viscosity 1) of 1.0% by weight chemically modified cellulose nanofiber aqueous dispersion immediately after production, was calculated by the following equation 4.

<Equation 4>

$$[(\text{Viscosity } 2 - \text{Viscosity } 1)/\text{Viscosity } 1] \times 100 \ (\%)$$

The change rate of viscosity (Viscosity 4) of 1.0% by weight chemically modified pulp aqueous dispersion after storage at low temperature and normal temperature, respectively, for 3 months, relative to viscosity (Viscosity 3) of 1.0% by weight chemically modified pulp aqueous dispersion immediately after production, was calculated by the following equation 5.

<Equation 5>

$$[(\text{Viscosity } 4 - \text{Viscosity } 3)/\text{Viscosity } 3] \times 100 \ (\%)$$

The change rate of viscosity (Viscosity 6) of 1.0% by weight chemically modified cellulose nanofiber aqueous dispersion obtained by defibrating chemically modified pulp after storage at low temperature and normal temperature, respectively, for 3 months, relative to viscosity (Viscosity 5) of 1.0% by weight chemically modified cellulose nanofiber aqueous dispersion obtained by defibrating chemically modified pulp immediately after production, was calculated by the following equation 6.

<Equation 6>

$$[(\text{Viscosity } 6 - \text{Viscosity } 5)/\text{Viscosity } 5] \times 100 \ (\%)$$

{Example 1}

Water was added to the carboxylated pulp obtained in Production Example 1 to prepare an aqueous dispersion with a solid content concentration of 1.0% by weight, and the pH was adjusted to about 7 as necessary. Thereafter, the aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity immediately after production was measured. The carboxylated cellulose nanofiber aqueous dispersion obtained above was put in a polypropylene container (trade name: Pack Clean, manufactured by As One Corporation) and stored at 2 to 6°C, a part thereof was taken out after 3 months and 6 months, and B-type viscosity was measured. Incidentally, even after storage for 6 months, no mold or discoloration was visually confirmed.

{Example 2}

Water was added to the carboxymethylated pulp obtained in Production Example 2 to prepare an aqueous dispersion with a solid content concentration of 1.0% by weight, and the pH was adjusted to about 7 as necessary. Thereafter, the aqueous dispersion was processed with a high pressure homogenizer (20°C, 150 MPa) three times to obtain a carboxymethylated cellulose nanofiber aqueous dispersion (average fiber diameter: 12 nm, aspect ratio: 130), and then B-type viscosity immediately after production and after 3 months was measured, as in Example 1. Incidentally, even after storage for 3 months, no mold or discoloration was visually confirmed.

{Example 3}

Water was added to the cationized pulp obtained in Production Example 3 to prepare an aqueous dispersion with a solid content concentration of 1.0% by weight, and the pH was adjusted to about 7 as necessary. Thereafter, the aqueous dispersion was processed with a high pressure homogenizer (20°C, 150 MPa) three times to obtain a cationized cellulose nanofiber aqueous dispersion (average fiber diameter: 20 nm, aspect ratio: 110), and then B-type viscosity immediately after production and after 3 months was measured, as in Example 1. Incidentally, even after storage for 3 months, no mold or discoloration was visually confirmed.

{Example 4}

Water was added to a part of the carboxylated pulp obtained in Production Example 1 to prepare an aqueous dispersion with a solid content concentration of 1.0% by weight, and the pH was adjusted to about 7 as necessary, then B-type viscosity of the carboxylated pulp aqueous dispersion immediately after production was measured. The carboxylated pulp aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity of the carboxylated cellulose nanofiber aqueous dispersion immediately after production was measured. Next, the remaining carboxylated pulp was put into a polyethylene bag with a chuck (trade name: Unipack, manufactured by SEISANNIPPONSHA LTD.) and stored at 2 to 6°C for 3 months, and then water was added thereto to prepare an aqueous dispersion with a solid content concentration of 1.0% by weight. The pH was adjusted to about 7 as necessary, and then B-type viscosity of the carboxylated pulp aqueous dispersion after 3 months was measured. The carboxylated pulp aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity of the carboxylated cellulose nanofiber aqueous dispersion after 3 months was measured. Incidentally, even after storage for 3 months, no mold or discoloration was visually confirmed.

{Example 5}

Water was added to the carboxylated pulp obtained in Production Example 1 to prepare an aqueous dispersion with a solid content concentration of 1.0% by weight, and the pH is adjusted to about 7 as necessary. Thereafter, Statect 100 (manufactured by NISSIN KAGAKU KENKYUSHO CO.,LTD.) as a preservative was added thereto so as to be 0.005% by weight with respect to the solid content of CNF, and the mixture was mixed to obtain a carboxylated pulp aqueous dispersion containing the preservative. This aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity immediately after production was measured. The carboxylated cellulose nanofiber aqueous dispersion containing the preservative obtained above was put in a polypropylene container (trade name: Pack Clean, manufactured by As One Corporation) and stored at 2 to 6°C, a part thereof was taken out after 3 months and 6 months, and B-type viscosity was measured. Incidentally, even after storage for 6 months, no mold or discoloration was visually confirmed.

{Comparative Example 1}

Water was added to the carboxylated pulp obtained in Production Example 1 to prepare an aqueous dispersion with a solid content concentration of 1.0% by weight, and the pH was adjusted to about 7 as necessary. Thereafter, the aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity immediately after production was measured. The carboxylated cellulose nanofiber obtained above was put in a polypropylene container (trade name: Pack Clean, manufactured by As One Corporation) and stored under normal temperature conditions (20 to 25°C) for 3 months, and B-type viscosity after 3 months was measured. Incidentally, when one month passed after storage, mold was sometimes visually confirmed.

{Comparative Example 2}

Water was added to the carboxymethylated pulp obtained in Production Example 2 to prepare an aqueous dispersion with a solid content concentration of 1.0% by weight, and the pH was adjusted to about 7 as necessary.

Thereafter, the aqueous dispersion was processed with a high pressure homogenizer (20°C, 150 MPa) three times to obtain a carboxymethylated cellulose nanofiber aqueous dispersion (average fiber diameter: 12 nm, aspect ratio: 130), and then B-type viscosity immediately after production and after 3 months was measured, as in Comparative Example 1. Incidentally, when one month passed after storage, mold was sometimes visually confirmed.

{Comparative Example 3}

Water was added to the cationized pulp obtained in Production Example 3 to prepare an aqueous dispersion with a solid content concentration of 1.0% by weight, and the pH was adjusted to about 7 as necessary. Thereafter, the aqueous dispersion was processed with a high pressure homogenizer (20°C, 150 MPa) three times to obtain a cationized cellulose nanofiber aqueous dispersion (average fiber diameter: 20 nm, aspect ratio: 110), and then B-type viscosity immediately after production and after 3 months was measured, as in Comparative Example 1. Incidentally, when one month passed after storage, mold was sometimes visually confirmed.

{Comparative Example 4}

Water was added to a part of the carboxylated pulp obtained in Production Example 1 to prepare an aqueous dispersion with a solid content concentration of 1.0% by weight, and the pH was adjusted to about 7 as necessary, then B-type viscosity of the carboxylated pulp aqueous dispersion immediately after production was measured. The carboxylated pulp aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity of the carboxylated cellulose nanofiber aqueous dispersion immediately after production was measured. Next, the remaining carboxylated pulp was put into a polyethylene bag with a chuck (trade name: Unipack, manufactured by SEISANNIPPONSHA LTD.) and stored under normal temperature conditions (20 to 25°C) for 3 months, and then water was added thereto to prepare an aqueous dispersion with a solid content concentration of 1.0% by weight. The pH was adjusted to about 7 as necessary, and then B-type viscosity of the carboxylated pulp aqueous dispersion after 3 months was measured. The carboxylated pulp aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity of the carboxylated cellulose nanofiber aqueous dispersion after 3 months was measured. Incidentally, when one month passed after storage, mold was sometimes visually confirmed.

{Comparative Example 5}

Water was added to the carboxylated pulp obtained in Production Example 1 to prepare an aqueous dispersion with a solid content concentration of 1.0% by weight, and the pH is adjusted to about 7 as necessary. Thereafter, Statect 100 (manufactured by NISSIN KAGAKU KENKYUSHO CO.,LTD.) as a preservative was added thereto so as to be 0.005% by weight with respect to the solid content of CNF, and the mixture was mixed to obtain a carboxylated pulp aqueous dispersion containing the preservative. This aqueous dispersion was processed with a high pressure homogenizer (20°C, 150 MPa) three times to obtain a carboxylated cellulose nanofiber aqueous dispersion (average fiber diameter: 4 nm, aspect ratio: 150), and B-type viscosity immediately after production was measured. The carboxylated cellulose nanofiber aqueous dispersion containing the preservative obtained above was put in a polypropylene container (trade name: Pack Clean, manufactured by As One Corporation) and stored under normal temperature conditions (20 to 25°C), a part thereof was taken out after 3 months and 6 months, and B-type viscosity was measured. Incidentally, even after storage for 6 months, no mold or discoloration was visually confirmed.

The viscosity change rate of the chemically modified cellulose nanofibers is shown in Table 1, and the viscosity change rate of the chemically modified pulp is shown in Table 2. As a result of putting the chemically modified pulp and the chemically modified cellulose nanofibers in a bag or container for storage and storing at 0°C to 18°C, it was possible to suppress viscosity reduction that had occurred when stored at normal temperature.

{Table 1}

| Sample | Type of chemical modification | State during storage | Temperature during storage | Presence of preservative | Viscosity change rate (%) of chemically modified CNF | |
|---|---|---|---|---|---|---|
| | | | | | After 3 months | After 6 months |
| Example 1 | Carboxylation | Chemically modified CNF | 2 to 6°C | None | 5.6 | 8.1 |
| Example 2 | Carboxymethylation | Chemically modified CNF | 2 to 6°C | None | 8.5 | - |
| Example 3 | Cationization | Chemically modified CNF | 2 to 6°C | None | 2.0 | - |
| Example 4 | Carboxylation | Chemically modified pulp | 2 to 6°C | None | 1.1 | - |
| Example 5 | Carboxylation | Chemically modified CNF | 2 to 6°C | Present | 4.7 | 18.0 |
| Comparative Example 1 | Carboxylation | Chemically modified CNF | Normal temperature | None | -10.5 | -27.9 |
| Comparative Example 2 | Carboxymethylation | Chemically modified CNF | Normal temperature | None | -12.3 | - |
| Comparative Example 3 | Cationization | Chemically modified CNF | Normal temperature | None | -17.2 | - |
| Comparative Example 4 | Carboxylation | Chemically modified pulp | Normal temperature | None | -41.6 | - |
| Comparative Example 5 | Carboxylation | Chemically modified CNF | Normal temperature | Present | -11.2 | -22.8 |

{Table 2}

| Sample | Type of chemical modification | State during storage | Temperature during storage | Presence of preservative | Viscosity change rate (%) of chemically modified pulp |
|---|---|---|---|---|---|
| Example 4 | Carboxylation | Chemically modified pulp | 2 to 6°C | None | 3.3 |
| Comparative Example 4 | Carboxylation | Chemically modified pulp | Normal temperature | None | -18.0 |

**Claims**

1. A method for storing chemically modified cellulose fibers, comprising storing chemically modified cellulose fibers in an atmosphere of 0 to 18°C.

2. The method for storing chemically modified cellulose fibers according to claim 1, wherein the chemically modified cellulose fibers are chemically modified pulp.

3. The method for storing chemically modified cellulose fibers according to claim 1, wherein the chemically modified cellulose fibers are chemically modified cellulose nanofibers.

4. The method for storing chemically modified cellulose fibers according to any one of claims 1 to 3, wherein the chemically modified cellulose fibers comprise at least one selected from carboxylated (oxidized) cellulose fibers, carboxymethylated cellulose fibers, cationized cellulose fibers, phosphorylated cellulose fibers and acetylated cellulose fibers.

5. A method for producing chemically modified cellulose nanofibers, comprising the step of defibrating the chemically modified pulp stored by the method as defined in claim 2.

## INTERNATIONAL SEARCH REPORT

| International application No. |
| --- |
| PCT/JP2018/008897 |

**A. CLASSIFICATION OF SUBJECT MATTER**
Int.Cl. C08J3/00(2006.01)i, C08B3/06(2006.01)i, C08B5/00(2006.01)i, C08B11/12(2006.01)i, C08B15/04(2006.01)i, C08B15/06(2006.01)i

According to International Patent Classification (IPC) or to both national classification and IPC

**B. FIELDS SEARCHED**

Minimum documentation searched (classification system followed by classification symbols)
Int.Cl. C08J3/00-3/28, C08J99/00, C08B1/00-37/18, C08K3/00-13/08, C08L1/00-101/14

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2011-46793 A (THE UNIVERSITY OF TOKYO) 10 March 2011, claim 1, paragraphs [0050]-[0052], table 1 (Family: none) | 1, 2, 4, 5<br>3 |
| Y | JP 2011-202010 A (TOPPAN PRINTING CO., LTD.) 13 October 2011, claim 1, paragraph [0030] (Family: none) | 3 |
| Y | JP 2017-25123 A (NIPPON PAPER INDUSTRIES CO., LTD.) 02 February 2017, claim 1, paragraph [0003] (Family: none) | 3 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 May 2018 (15.05.2018) | 29 May 2018 (29.05.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2018/008897

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-166258 A (NIPPON PAPER INDUSTRIES CO., LTD.) 15 September 2016, claim 1, paragraphs [0001], [0008], [0011]-[0041], examples (Family: none) | 1-5 |
| A | JP 2015-28161 A (SHIN-ETSU CHEMICAL CO., LTD.) 12 February 2015, claim 1, paragraphs [0006], [0008], [0010]-[0021], examples 1-7 & EP 2829553 A1, claim 1, paragraphs [0001], [0007]-[0009], [0010]-[0039], examples 1-7 & US 2015/0005486 A1 & CN 104250305 A & KR 10-2015-0001641 A & TW 201518325 A | 1-5 |
| P, X | JP 2017-57285 A (OJI HOLDINGS CORPORATION) 23 March 2017, claims 1, 4, 5, paragraphs [0034], [0036], [0037], [0054], [0074], [0104]-[0111] (Family: none) | 1, 3-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012121957 A

- WO 2010095574 A